# EUROPEAN PATENT APPLICATION

(11) **EP 4 588 823 A1**
(43) Date of publication of application: **23.07.2025**
(21) Application number: 24153055.9
(22) Date of filing: 22.01.2024
(51) Int. Cl.: B65G 1/02, A62C 3/00, B65G 1/04

(54) **AN ELONGATE FRAME MEMBER**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to an elongate frame member for use in a frame of an automated storage and retrieval system. The frame defines a plurality of storage columns for receiving stacks of storage containers. The elongate frame member comprises: a conduit for carrying fluid; and at least one outlet at a longitudinal surface of the elongate frame member. Each outlet is in communication with the conduit. The outlet is arranged to deliver the fluid from the conduit into the automated storage and retrieval system. The conduit is housed within the elongate frame member.

## Description

### TECHNICAL FIELD

The disclosure relates to an elongate frame member. More particularly, it relates to an elongate frame member for use in a framework structure of an automated storage and retrieval system, and a method of delivering fluid to an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

As a safety measure, warehouses usually include fire detection and suppression systems. Detection systems detect conditions indicative of fire in the warehouse, such as smoke or heat. In response, the detection systems trigger alarms and/or fire suppression systems. Traditional warehouse fire suppression systems involve ceiling sprinklers supplying fire suppressant downward into the warehouse. In Europe, the configuration and operation of these ceiling sprinklers are governed by European standard EN 12845:2015, which prescribes a maximum clearance from a storage location and ceiling sprinklers, and minimum storage block and aisle sizes. When triggered, the alarm may call fire fighters to the warehouse to supply fire suppressant directly onto the fire from the warehouse aisles using a firehose.

However, existing fire suppression systems may not be susceptible to further improvement for automated storage and retrieval systems comprising a three-dimensional grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a side view of a frame member suitable for use in the system of Fig. 1;
Fig. 5B shows a perspective view of a frame member suitable for use in the system of Fig. 1;
Fig. 5C shows an enlarged portion of the frame member of Fig. 5A;
Fig. 5D shows an enlarged portion of the frame member of Fig. 5B;
Fig. 6 shows another frame member suitable for use in the system of Fig. 1;
Fig. 7 shows a section of a storage system, such as the system of Fig. 1;
Fig. 8 shows a storage column suitable for use in the system of Fig. 1; and
Fig. 9 shows a flowchart of a method suitable for delivering fluid to the system of Fig. 1.

### DETAILED DESCRIPTION

In overview the disclosure relates to an elongate frame member that is suitable for use in a frame of an automated storage and retrieval system (also referred to as a storage system). The frame defines a plurality of storage columns for receiving stacks of storage containers. The frame member includes a conduit housed within the frame member. The conduit is suitable for carrying a fluid. The frame member is dimensionally elongate, i.e., the frame member is long in relation to its width. The longitudinal surface (the surface parallel to the elongate axis of the frame member) includes at least one outlet in fluid communication with the conduit such that, when the frame member is installed in an automated storage and retrieval system, the at least one outlet supplies the fluid from the conduit into the automated storage and retrieval system.

Accordingly, in a frame of an automated storage and retrieval system, the elongate frame member allows fluid to be supplied directly to the storage columns of the automated storage and retrieval system via the outlets. The effect of the frame member is therefore that fluid can be readily introduced into containers of densely packed automated storage and retrieval systems in which containers may otherwise be inaccessible to externally supplied fluids. For instance, if the fluid is a fire suppressant, the effect of the frame member is a fire suppression system that is better suited for densely packed automated storage and retrieval systems in which containers may otherwise be inaccessible to externally supplied fire suppressant. For instance, the elongate frame member therefore provides an improvement over ceiling sprinklers, fluid from which may not reach every bin quickly, especially those located towards the centre of the densely packed three-dimensional grid. Accordingly, the elongate frame member addresses a need for alternative fire suppression solutions in automated storage and retrieval systems.

Further, the elongate frame member provides the effect of acting as a central hub for the supply of fluid into the automated storage and retrieval system. This is because the conduit is housed within the elongate frame member. For instance, as the outlets are in fluid communication with the conduit, they can be positioned in any direction about the frame member, towards any column in the storage and retrieval system, without routing pipes around the frame member. Accordingly, the outlets can equally supply fluid in all directions about the frame member, without further piping. As pipes need not be routed around the frame member, the frame member described herein can enable simpler, easier and cheaper manufacture of an automated storage and retrieval system comprising a fire suppression system.

### Automated storage and retrieval system overview

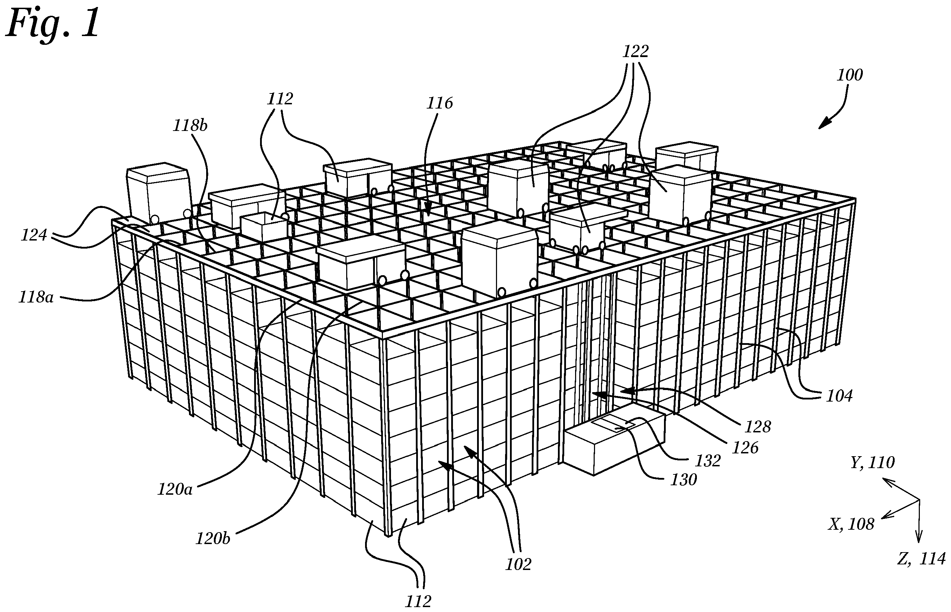

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

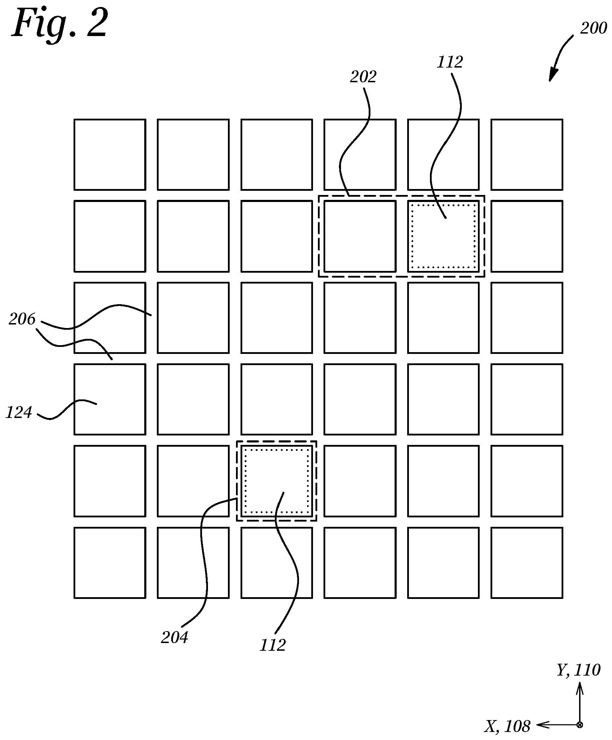

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

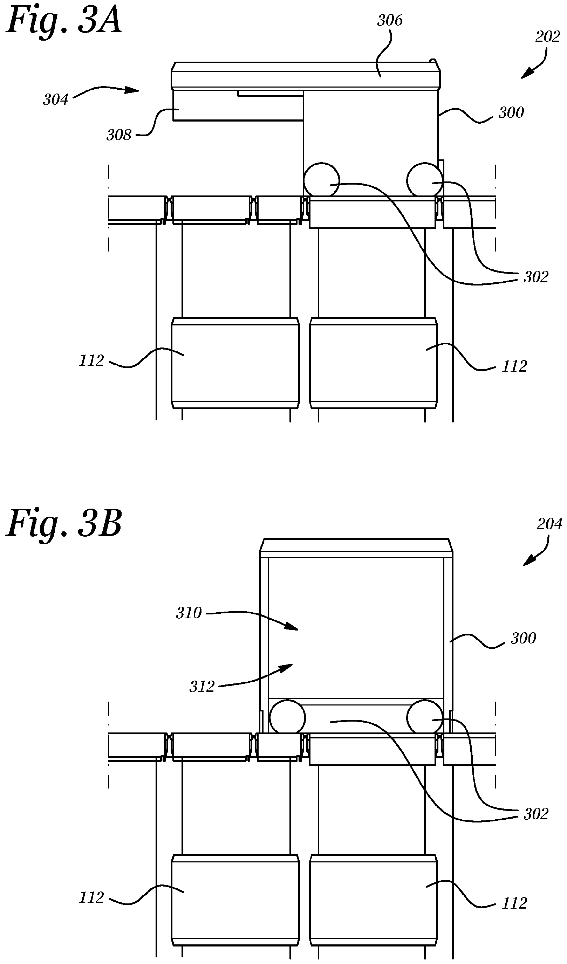

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

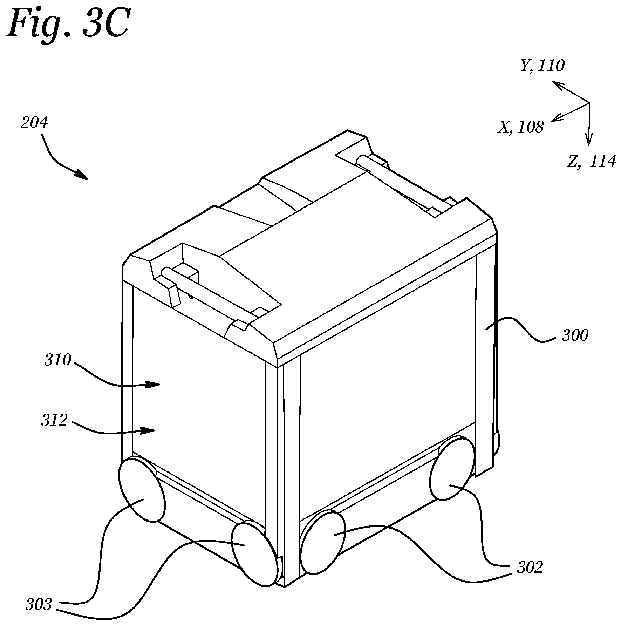

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

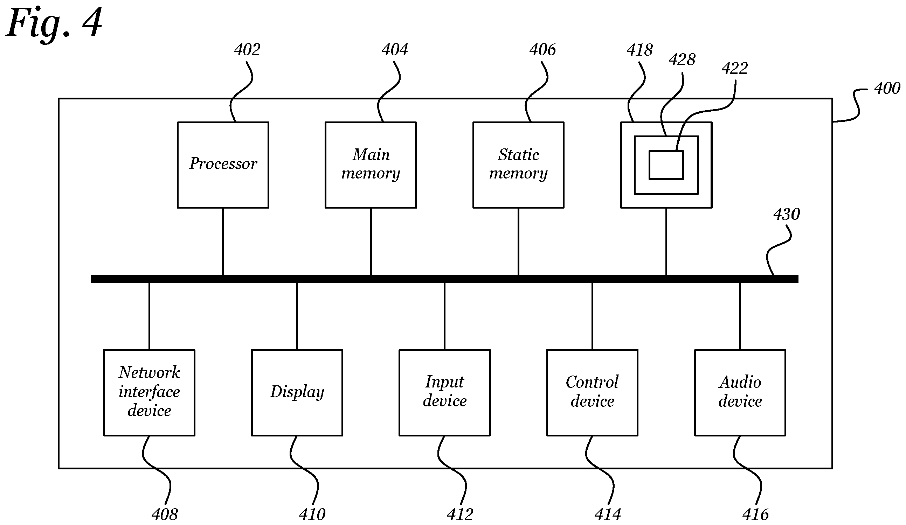

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Specific improvements to frame members

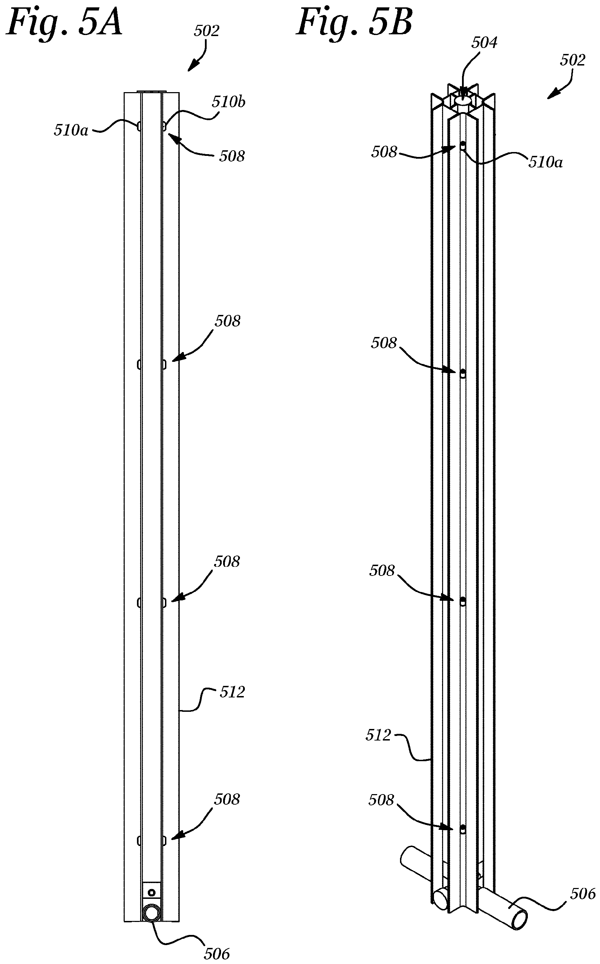

Referring to Figs. 5A and 5B, a frame member 502 (also referred to as a support element) is respectively depicted in side view and perspective view. Frame member 502 is suitable for use in the frame of the automated storage and retrieval system of Fig. 1. Frame member 502 may also be referred to as a fluid-supplying frame member to distinguish frame member 502 from the other frame members 104 of the frame. As shown, the frame member 502 is elongate. That is, the frame member is longer in a longitudinal direction than it is wide in a transverse direction perpendicular to the longitudinal direction. The longitudinal direction may be considered an elongate or long direction and may extend parallel to the longitudinal or elongate axis. Similarly, the transverse direction may be any dimension extending radially from the longitudinal or elongate axis, for instance in a plane transverse to the longitudinal or elongate axis.

The frame member 502 houses a conduit 504 suitable for carrying fluid, such as fire suppressant, or an environmental composition comprising for instance carbon dioxide, water vapour or mist. The conduit 504 may have a polygonal or circular transverse cross section. Alternatively, the cross section may take any other regular or irregular shape. In general, the cross section of the conduit 504 may conform to the external cross section of the frame member 502 for ease of manufacturing and to maximise fluid volume in the conduit 504. The conduit 504 may extend throughout a portion, or the entire elongate length, of the frame member 502. Extending the conduit 504 throughout the entire elongate length allows the conduit 504 to supply fluid to an entire vertical column in the automated storage and retrieval system. On the other hand, extending the conduit 504 throughout a portion of the frame member 502 allows fluid to be targeted to particular portions of the vertical columns 102, such as the lower portions which are less directly accessible to fire fighters.

Fluid is supplied to the frame member 502 by fluid supply pipe 506 (e.g., a distributor pipe), which is in communication with the conduit 504. As depicted in Figs. 5A and 5B, the fluid supply pipe 506 may be located at the base of the frame member 502, at or under the floor of the automated storage and retrieval system. However, the fluid supply pipe may equally be located at a top, upper, or intermediate level of the frame member.

The frame member 502 also includes at least one outlet 508 at (for instance on or in) its longitudinal surface. The longitudinal surface is the surface of the frame member 502 extending in the elongate direction, parallel to the longitudinal axis of the elongate frame member 502. When the frame member is provided in an automated storage and retrieval system, the elongate direction may be the vertical direction (e.g., in the Z direction 114 shown in Fig. 1). Alternatively, the elongate direction may be the horizontal direction (e.g., any direction in the plane defined by the X and Y directions 108, 110 shown in Fig. 1).

Each outlet 508 is in communication with the conduit 504 and is arranged to allow the delivery of fluid from the conduit 504 into the environment surrounding the frame member 502. This environment may be an automated storage and retrieval system. For instance, when used in the frame of grid 100, each outlet 508 of frame member 502 may be arranged to allow the delivery of fluid into storage columns of the automated storage and retrieval system that neighbour the frame member 502. The outlet 508 therefore allows fluid to be supplied from the conduit 504 into the grid 100, especially to the internal portions of the grid which are less directly accessible to fire fighters. As such, when the fluid is fire suppressant, the elongate frame member addresses the need for alternative fire suppression solutions in automated storage and retrieval systems.

A plurality of outlets 508 may be distributed along the longitudinal surface of the frame member 502. This distribution is lengthways along the frame member 502, parallel to the elongate axis. The distribution need not be uniform. For instance, the plurality of outlets 508 may be present at one position along the frame member (such as an upper position or upper half of the frame member, when viewed in relation to the automated storage and retrieval system), but not the other position along the frame member (such as a lower position or lower half of the frame member, opposing the upper position). When the plurality of outlets 508 are present at the upper position, but not the lower position, gravity may draw fluid, delivered from the outlets 508 to the top of a storage column, towards the bottom of the storage column. Alternatively, the plurality of outlets 508 may be evenly distributed along the longitudinal surface to provide an even distribution of fluid delivery into the neighbouring storage columns. The plurality of outlets 508 may be distributed at less than or equal to storage container stacking intervals. Storage container stacking intervals correspond to the height of each storage container arranged in a stack. Thus, a stacking interval is the periodic distance between each storage container when the storage containers are arranged in a stack. Therefore, when the stack of storage containers is received in a storage column, at least one outlet 508 is provided per storage container. In this configuration, the outlets 508 can reliably introduce fluid into every storage container of the stack.

As shown in Figs. 5A-5D, each outlet 508 may include a plurality of outlet orifices 510a, 510b, 510c distributed around the transverse perimeter of the frame member 502. The transverse perimeter is the perimeter of the transverse cross section of the frame member 502, where the transverse cross section is the planar cross section taken perpendicular to the frame member's elongate axis. Each outlet orifice 510a, 510b, 510c may be positioned to deliver fluid from the conduit 504 to a respective segment around the transverse perimeter of the frame member. Each outlet orifice 510a, 510b, 510c may be positioned to, for instance, face a respective segment. Here, the respective segments comprise a radially projected area from a portion of the perimeter of the transverse cross section in a direction perpendicular to the elongate axis. In other words, the respective segments comprise portions of the surrounding environment visible to (for instance within a field of view of) the corresponding outlet orifice 510a, 510b, 510c. The respective segments may not be mutually exclusive. For instance, portions of the surrounding environment may be present in multiple segments. Each of the respective segments may combine to encompass the entire transverse perimeter of the frame member 502. That is, the respective segments may combine to include the radially projected area from the entire perimeter of the transverse cross section. Combining the respective segments to encompass the entire transverse perimeter allows the frame member to deliver the fluid to all of its neighbouring storage columns.

An effect of positioning the outlet orifices 510a, 510b, 510c to deliver fluid from the conduit 504 to respective segments that encompass the entire transverse perimeter, is that the frame member 502 can deliver fluid to every neighbouring storage column. If the frame member 502 is arranged to neighbour a particular number of storage columns, the outlet 508 may include a corresponding number (the same number) of outlet orifices 510a, 510b, 510c. Each outlet orifice 510a, 510b, 510c may therefore be positioned to deliver fluid from the conduit 504 to a respective segment in the direction of a respective storage column. Thus, when included in the frame, each outlet orifice 510a, 510b, 510c may have a field of view that includes a respective storage column.

As depicted in Figs. 5A and 5B, the frame member 502 may include brackets 512 to hold or guide neighbouring stacks of storage containers. The brackets may act against corresponding brackets on opposing frame members neighbouring the same storage column to retain the stacks of storage containers therebetween. Similarly, the brackets may act to guide the gripping device(s) of the robots 202, 204 shown in Figs. 3A-3C. As depicted, gaps may be provided through the brackets to allow fluid to pass from the outlet to the respective neighbouring storage containers. The gaps may correspond to respective segments around the transverse perimeter of the frame member discussed herein.

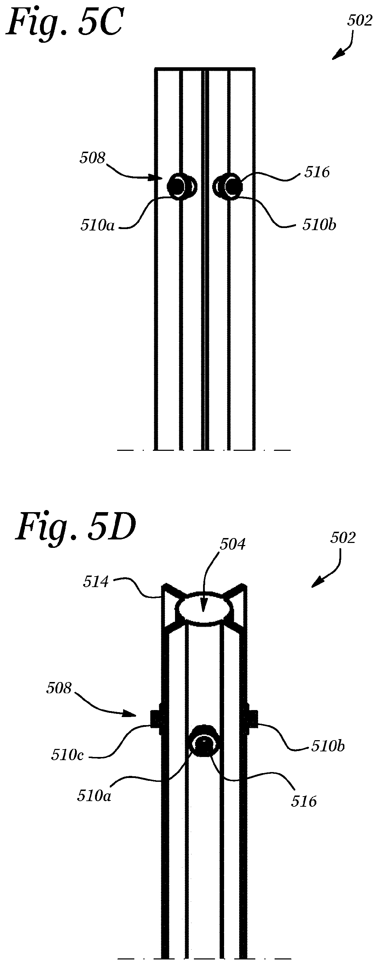

Figs. 5C and 5D depict enlarged portions of the frame member 502 depicted in Figs. 5A and 5B including an outlet 508 with outlet orifices 510a, 510b, 510c. For convenience of illustration, Figs. 5C and 5D do not depict brackets 512. As shown, the frame member 502 include spacers 514 to enable the housing of further utilities, around the conduit 504, within or about the frame member. The spacers may also partition the perimeter of the transverse cross section according to the number and position of outlet orifices 510a, 510b, 510c to allow for a directional supply of fluid.

Outlet 508 may additionally include a nozzle 516. The nozzle is a spout of the outlet 508 which allows the outlet to direct and/or disperse fluid output. When the fluid is a fire suppressant, the nozzle maybe a fire suppression nozzle, i.e., a nozzle suitable for delivering the fire suppressant. The fire suppression nozzle may comprise a spray nozzle. Spray nozzles are arranged to fragment the fluid into droplets and thereby distribute the fluid across a large surface area within the neighbouring storage column. Types of spray nozzle include fog nozzles, surface impingement nozzles, misting nozzles, sprinkler heads, and so on. Spray nozzles may fragment the fluid into droplets using dispersion elements at or near their aperture. This allows greater spread of the fire suppressant into the neighbouring storage column, which increases the surface area covered by fire suppressant and thereby increases the frame member 502's fire suppression effectiveness.

In some examples, outlet 508 may include an actuatable valve arranged to selectively isolate the conduit 504 from the environment surrounding the frame member 502. The valve therefore allows selective delivery of fluid from the conduit 504 into the automated storage and retrieval system. The actuatable valve may comprise a passive actuator (e.g., a passive actuation valve) arranged to actuate automatically in response to an actuation condition. For instance, when the fluid is a fire suppressant, the actuation condition may be a condition indicative of fire such as the presence of smoke, an elevated ambient temperature in the grid 100, or a flame (detected using, for instance, a camera in combination with machine vision techniques). Alternatively, the actuatable valve may comprise an active actuator, arranged to actuate in response to a signal. When the fluid is a fire suppressant, this signal may originate from a fire detection system of the automated storage and retrieval system.

For instance, the fire suppression nozzle may comprise a sprinkler head with a fusible element configured to actuate the sprinkler head at a predetermined temperature. Such sprinkler heads are particularly useful in passive fire suppression systems since they do not rely on active fire detection signals. Passive fire suppression systems are particularly advantageous in the automated storage and retrieval systems described herein because they avoid the need to install active fire detectors throughout the grid, which may be complex and/or expensive.

In these examples, the fusible element is an actuatable valve. In its unactuated state, the fusible element rests in the aperture of the sprinkler head, such that the fusible element isolates the conduit 504 from the surrounding environment. The fusible element actuates by fusing. For instance, the fusible element may fuse in response to an elevation in temperature surrounding the frame member 502 to a predetermined temperature. In some examples, the fusible element may comprise an outer casing with a lower melting point than the predetermined temperature such that the fusible element fuses by melting. In other examples, the fusible element may comprise a frangible liquid-containing bulb that is configured to break at the predetermined temperature. The predetermined temperature may depend on the contents and the ambient temperature of the automated storage and retrieval system. For instance, the predetermined temperature may be calculated based on the combustion temperature or flash point of the goods stored in the containers or bins 112. The predetermined temperature may be at least 20°C or at least 40°C higher than the ambient temperature of the automated storage and retrieval system. The predetermined temperature may be at least 30°C, at least 50°C or at least 70°C.

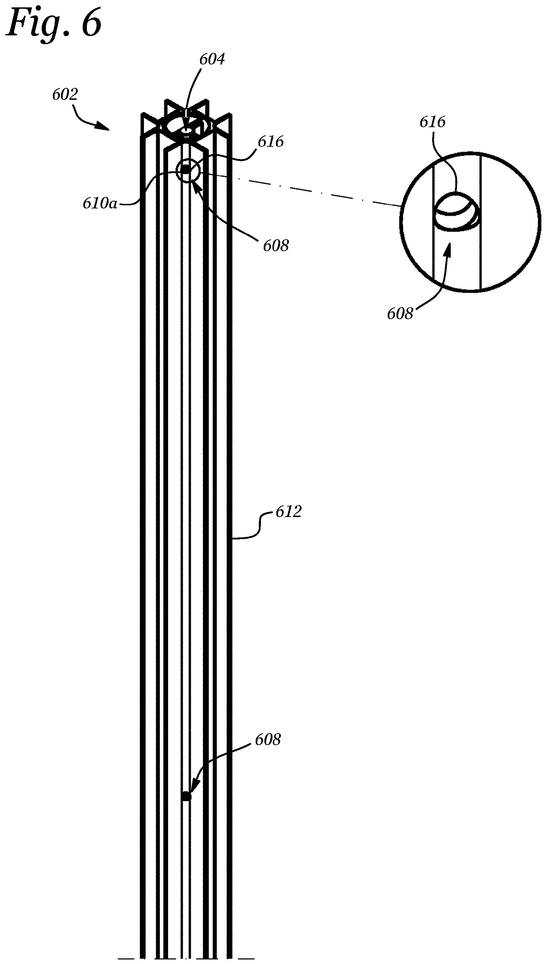

Fig. 6 illustrates another example frame member 602 with an alternate outlet 608. Frame member 602 is also suitable for use in the frame of the automated storage and retrieval system of Fig. 1. Frame member 602 includes many common features with frame member 502 depicted in Figs. 5A-5D. Description of these common features are as set out with respect to Figs. 5A-5D. For instance, the frame member 602 illustrated in Fig. 6 is elongate and fluid-supplying. Further, like frame member 502, frame member 602 may also include at least some of: a conduit 604 housed within the frame; a supply pipe (not shown) for the supply of fluid to the frame member 602; at least one outlet 608 at or in its longitudinal surface, including a plurality of outlet orifices 610a (only one outlet orifice is shown in Fig. 6); and brackets 612 to hold neighbouring stacks of storage containers.

However, the at least one outlet 608 of frame member 602 comprises a vent 616. As shown, vent 616 may be provided as openings (e.g., holes, apertures, slits or cracks). When the frame member 602 is used in the frame of an automated storage and retrieval system, the vent 616 provides direct fluid communication between the conduit 604 and the grid. As such, the vent may not include an actuatable valve or a nozzle. Frame member 602 is therefore simpler to implement and is particularly useful for delivering gases and environmental compositions to automated storage and retrieval systems. For instance, if the fluid comprises a gaseous (or clean) fire suppressant, frame member 602 may be used to flood the grid of the automated storage and retrieval system to suffocate a fire. This flooding may be triggered at a remote location from the frame member 602, responsive to which the gaseous fire suppressant may be supplied to the supply pipe of the frame member 602. Accordingly, frame member 602 is particularly suited for remotely triggered fire suppression systems.

Alternatively, frame member 602 may be used to provide gases to vertical farming settings. Vertical farming is the practice of growing crops in vertically stacked layers. Vertical farming is carried out in high carbon dioxide and/or humidity atmospheres, and possibly in high nutrient rich atmospheres. These atmospheres facilitate fertilisation and efficient crop growth. In the storage system described herein, vertical farming may be carried out by growing crops in the stack of storage containers or bins 112. However, on account of the high bin density in such systems, a problem exists in providing ventilation to bins 112 located in the core of the grid 100. To solve this problem, frame member 602 may also be used to ventilate the bins located in the core of the grid 100. Accordingly, the conduit 604 may be supplied with an environmental composition comprising for instance carbon dioxide, water vapour, or mist. The water vapour or mist may be nutrient rich to act as a fertiliser. The environmental composition may comprise a composition of greater than: 50%, 60%, 75%, 80%, 85%, 90%, or 95% carbon dioxide. The environmental composition may be pure carbon dioxide. The environmental composition is then delivered into the storage system via the at least one vent 616, thereby maintaining a high carbon dioxide and/or nutrient rich atmosphere in the grid 100 and encouraging efficient crop growth.

### Improved frame members in the grid of an automated storage and retrieval system

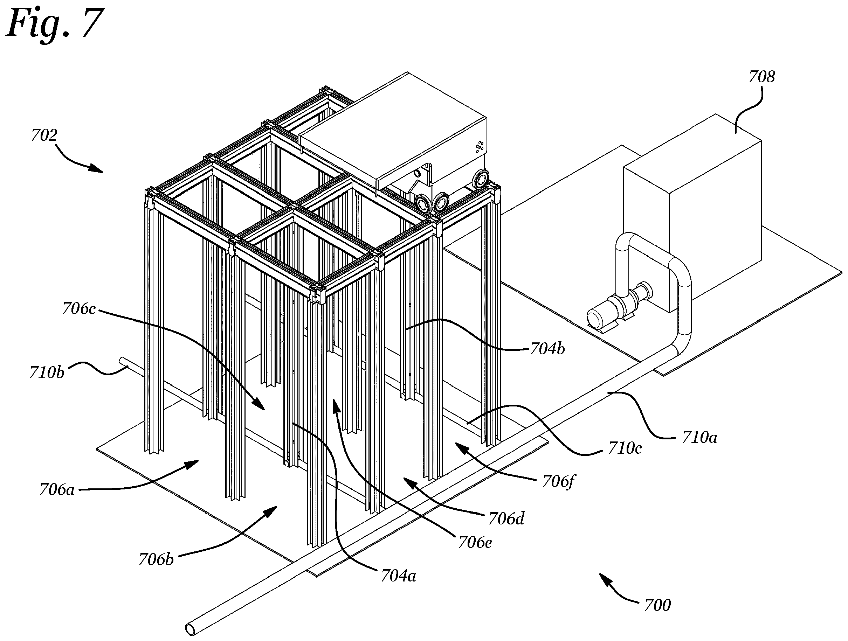

Referring to Fig. 7, a frame 702 in an automated storage and retrieval system is defined by frame members. At least a subset of the frame members may be fluid-supplying frame members, such as those described herein with respect to Figs. 5A-6. Accordingly, at least a subset of the frame members house a respective conduit for carrying a fluid and include at least one outlet at their respective longitudinal surfaces.

For example, the section of the grid 700 depicted in Fig. 7 includes fluid-supplying frame members 704a, 704b as vertical frame members or components. Also shown are six storage columns 706a, 706b, 706c, 706d, 706e, 706f, defined by the frame 702. However, the section of the grid 700 depicted in Fig. 7 may be a section of grid 100 of the automated storage and retrieval system shown in Fig. 1, which includes many more than six storage columns.

Fluid-supplying frame members 704a, 704b are positioned in grid 700 such that their respective outlets are arranged to deliver fluid from their respective conduits into respective columns of the automated storage and retrieval system. Each fluid-supplying frame member neighbours at least one column of the storage and retrieval system. In the grid 700 of Fig. 7, fluid-supplying frame member 704a neighbours storage columns 706a, 706b, 706c, 706d, and fluid-supplying frame member 704b - positioned at the edge of the grid 700 - neighbours storage columns 706e, 706f. Fluid-supplying frame member 704b may not be at the edge of the grid and may neighbour two further storage columns, not shown. The other frame members of the frame 702 may not include outlets (as depicted in Fig. 7), and therefore may not be fluid-supplying.

Accordingly, fluid maybe delivered to each of storage columns 706a, 706b, 706c, 706d from respective outlet orifices in fluid-supplying frame member 704a. Similarly, fluid may be delivered to each of storage columns 706e, 706f from respective outlet orifices in fluid-supplying frame member 704b. Here, each outlet orifice may be positioned in the frame 702 to deliver fluid to a respective segment around the transverse perimeter of the respective fluid-supplying frame member 704a, 704b. The respective segments may each therefore correspond to a neighbouring storage column. As such, each fluid-supplying frame member 704a, 704b may be arranged to neighbour a number of storage columns and the outlet of the respective fluid-supplying frame member 704a, 704b may comprise a corresponding number of outlet orifices. Thus, each outlet orifice may be positioned to face a respective neighbouring storage column and thereby deliver fluid to the neighbouring storage columns respectively.

Accordingly, by housing a conduit within the fluid-supplying frame members 704a, 704b, each fluid-supplying frame member can act as a central hub for supplying fluid into the storage columns of the automated storage and retrieval system. More specifically, the outlets and outlet orifices of the fluid-supplying frame members 704a, 704b can be positioned at any angle around the conduit. The outlets and outlet orifices may thereby direct fluid flow towards any column, without routing piping around the frame members. This allows for easier, cheaper and simpler manufacture of frame members 704a, 704b. This also allows for easier, cheaper and simpler manufacture of the grid 700 because fluid-supplying frame members 704a, 704b can be installed in the same manner as any other frame members, without additional routing. Thus, the systems described herein can be installed to deliver fluid to the grid without requiring complex routing around the frame.

In the depiction of Figs. 1, 2 and 7, the storage columns are tessellated in a quadrilateral fashion. That is, in top view, each column has a quadrilateral perimeter and is neighboured by four other columns at each of its four edges. Each column is also neighboured by four frame members at each of its four corners. As such, each frame member neighbours four storage columns. In these examples, the outlet orifices of fluid-supplying frame members 704a and 704b may be positioned to deliver fluid to each neighbouring storage column by delivering fluid to a respective quadrant surrounding the transverse perimeter. However, in other examples, the storage columns may be tessellated differently. For instance, the storage columns may be tessellated in a triangular fashion, such that each column has a triangular perimeter and is neighboured by three other columns at each of its three edges. Alternatively, the storage columns may be tessellated in a hexagonal fashion, such that each column has a hexagonal perimeter and is neighboured by six other columns at each of its six edges. The outlet orifices of fluid-supplying frame members 704a and 704b may therefore be positioned according to the storage column tessellation such that fluid can be delivered into each neighbouring storage column of fluid-supplying frame members 704a, 704b.

The section of the grid 700 depicted in Fig. 7 includes six storage columns 706a, 706b, 706c, 706d, 706e, 706f, and two fluid-supplying frame members 704a, 704b (which maybe as described in Figs. 5A, 5B, 5C, 5D, and/or 6). However, fluid-supplying frame members may also be present throughout the whole grid 100 of Fig. 1. For instance, every frame member, or substantially every frame member, of the grid 100 may be a fluid-supplying frame member. Alternatively, a subset of the grid's 100 frame members may be fluid-supplying. In some examples, the grid 100 may be organised in recurring unit cells of storage columns. Here, each unit cell comprises a fluid-supplying frame member and at least one column into which the fluid-supplying frame member is arranged to deliver fluid. The arrangement of columns into which the fluid supplying frame member is arranged to deliver fluid may be determined by the distribution of the outlet orifices around the transverse perimeter of the fluid supplying frame member. For instance, each outlet orifice may be positioned to deliver fluid from the conduit to segment(s) around the transverse perimeter corresponding to (e.g., facing) the column(s) of the unit cell including the fluid-supplying frame member. Accordingly, the fluid-supplying frame members are distributed such that fluid can be delivered into each (e.g., every) column of the grid. By organising the grid in recurring unit cells, the manufacture of the grid can be simplified and fluid can be reliably distributed throughout the storage volume. In some examples, the unit cells may include multiple fluid-supplying frame member as a redundancy measure to increase reliability.

For instance, referring to Fig. 7, a unit cell might comprise fluid-supplying frame member 704a and the neighbouring storage columns 706a, 706b, 706c, 706d, where the fluid-supplying frame member 704a is arranged to deliver fluid into all of storage columns 706a, 706b, 706c, 706d. This unit cell may be repeated throughout at least a section or zone of the grid 100 shown in Fig. 1. This section or zone of the grid 100 may comprise the internal columns of the grid, excluding the layer(s) of the outermost columns.

When the fluid is fire suppressant, the section or zone of the grid may comprise the storage columns within which flammable goods are stored. As used herein, the goods are considered flammable if they have a flash point less than 50°C above the ambient temperature in the automated storage and retrieval system, or if their flash point is at or below 60°C, at or below 50°C, at or below 40°C, or at or below 30°C. When the fluid is fire suppressant, the grid may include multiple zones, each of which may store goods with varying flammability or may otherwise be provided as buffer zones. The system may also include a fire detection system arrange to identify the zone in which fire is detected. When fire is detected within one zone of the grid, all the fluid-supplying frame members in that zone may be actuated and fluid may be delivered into that zone of the grid. Accordingly, the fire is localised and prevented from spreading into other zones, without flooding the entire grid with fire suppressant (and thereby potentially damaging a significant quantity of the stored goods). When the fluid is an environmental composition, the section of the grid may comprise storage columns containing a vertical farm.

Put generally, the support elements are distributed such that every column in a section of the grid (or the entire grid) may be provided with fluid by at least one support element. Accordingly, each fluid-supplying frame member may be positioned to deliver the fluid to a different storage column. For example, each fluid-supplying frame member may be arranged so that at least one outlet thereof is positioned to deliver the fluid to a different storage column respectively.

Referring again to Fig. 7, the automated storage and retrieval system may additionally include a fluid source 708 and a distributed network of pipes 710a, 710b, 710c connected thereto. The fluid source 708 may comprise a fluid reservoir containing the fluid to be delivered into the automated storage and retrieval system from the conduit. Alternatively, the fluid source 708 may be external to the automated stored and retrieval system, in which case the distributed network of pipes 710a, 710b, 710c may terminate at a hose socket (not illustrated in Fig. 7) into which the external fluid source may be supplied by, for instance, firefighting crews.

As described herein, the fluid may be a fire suppressant, i.e., any agent (liquid, gas, powder, or otherwise) suitable for use in a fire suppression system, or an environmental composition, suitable for use in vertical farming. These categories are not mutually exclusive, for instance, the environmental composition may also be a fire suppressant. Where the fluid is a fire suppressant, the fluid may comprise at least one of: a dry chemical fire suppressant, such as monoammonium phosphate, sodium bicarbonate, potassium bicarbonate, or potassium chloride; a foam fire suppressant, such as aqueous film-forming foam, film-forming fluoroprotein, or compressed air foam; a wet chemical fire suppressant, such as potassium acetate, potassium carbonate, or potassium citrate; a clean fire suppressant (or an inert gas fire suppressant), such as halons, carbon dioxide or inert gas; a dry powder fire suppressant, such as sodium chloride; a condensed aerosol fire suppressant; water; and/or any other suitable fire suppressant. Dry chemical fire suppressant, foam fire suppressant, and dry powder fire suppressant smother fires by forming a barrier between the fuel of the fire and the source of oxygen in the atmosphere. Wet chemical fire suppressant similarly forms a soapy film over the fuel. Clean, or gaseous, fire suppressant and condensed aerosol fire suppressant displace oxygen in the atmosphere surrounding a fire with carbon dioxide or other inert gasses. Water, when used as a fire suppressant, cools burning material. Preferably, the fire suppressant includes a foam fire suppressant.

The network of pipes 710a, 710b, 710c is arranged to communicate the fluid from the fluid supply 708 to the grid 700. As depicted in Fig. 7, the network of pipes may include a feeder pipe 710a in communication with parallel distributor pipes 710b, 710c. The feeder pipe 710a feeds the fluid from the fluid supply 708 to the distributor pipes 710b, 710c. The distributor pipes 710b, 710c then distribute the fluid to the respective conduits of at least one fluid-supplying frame member. As depicted in Fig. 7, the distributor pipes may be arranged to distribute the fluid to fluid-supplying frame members in rows of the grid 700 and the distributor pipes may be located beneath the grid 700. For instance, the distributor pipes may be located below a floor of the grid 700, which provides a flat base for the grid, increasing the stability of stacks of storage containers in columns 706a, 706b, 706c, 706d, 706e, 706f. Alternatively, the distributor pipes may be integrated within horizontal frame members or components at the top of the grid.

In some examples, the fluid source 708 is arranged to supply pressurised fluid into the network of pipes 710a, 710b, 710c. For instance, the fluid source may comprise a pre-pressurised cannister. Alternatively, the fluid source 708 may include a pressuriser, arranged to selectively pressurise the fluid. Accordingly, the fluid source 708 maybe arranged to introduce pressurised fluid into the conduit of each fluid-supplying frame member 704a, 704b. By supplying pressurised fluid into the network of pipes, the actuatable valve(s) in the outlet(s) of the fluid-supplying frame member need not propel the fluid on actuation. Rather, the actuatable valve(s) need only open for fluid to deliver into the automated storage and retrieval system. This enables simpler actuation mechanisms at the fluid-supplying frame members, which simplifies the assembly of fluid-supplying frame members disposed within the grid 700, thereby simplifying grid 700 manufacture.

In some embodiments, at least one master valve may be provided in the network of pipes 710a, 710b, 710c. These master valves are actuatable to allow selective flow of fluid from the fluid supply 708, through the network of pipes 710a, 710b, 710c, and into the conduits of fluid-supplying frame members. In some examples, the master valves may be provided instead of the actuatable valves in the fluid-supplying frame members. Accordingly, the master valves provide central actuation, which, when actuated or triggered, floods the network of pipes 710a, 710b, 710c with fluid. Central actuation allows remote triggering of fluid delivery, which is particularly suited for remotely triggered fire suppression systems.

As described herein, one fluid-supplying frame member may deliver fluid into multiple storage columns via outlets comprising orifices distributed around a transverse perimeter thereof. As such, fewer fluid-supplying frame members are required to achieve fluid delivery into every storage column of the grid. In examples where the fluid comprises fire suppressant, the result is that fewer fluid-supplying frame members are required to deliver fire suppressant into any storage column of the grid. Therefore, a fire suppression system capable of reaching every bin in automated storage and retrieval systems can be realised with fewer fluid-supplying frame members. As such, the fire suppression system can be installed into existing automated storage and retrieval systems with minimal complexity. Similarly, in examples where the fluid is an environmental composition, the result is that fewer fluid supplying frame members are required to deliver the environmental composition into any storage column. Furthermore, when the network of pipes 710a, 710b, 710c includes pressurised fluid, the reduction in number of fluid-supplying frame members advantageously reduces the drop in fluid pressure on delivery of fluid into (e.g., zones of) the automated storage and retrieval system, reducing the amount of pressure required for effective fluid delivery.

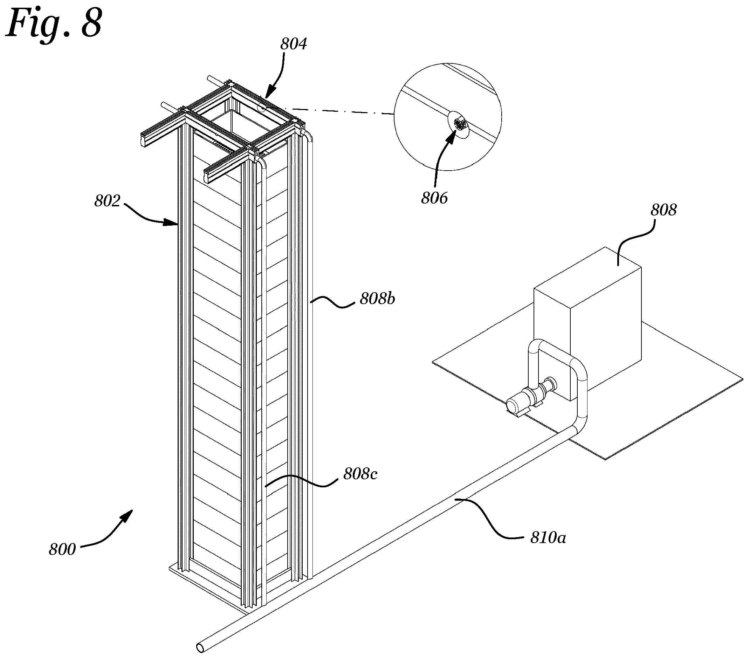

Fig. 8 illustrates a storage column 800 suitable for the automated storage and retrieval system shown in Fig. 1. Column 800 is depicted with a stack of storage containers. Column 800 is defined by frame 802. Column 800 is similar to columns 706a, 706b, 706c, 706d, 706e, 706f described with respect to Fig. 7. However, in column 800, a fluid-supplying frame member 804 is provided as a horizontal component of the frame 802. The fluid-supplying frame member 804 may be as described with respect to Figs. 5A, 5B, 5C, 5D, and/or 6. As depicted, when the fluid supplying frame member 804 is a horizontal component, the fluid supplying frame member 804 may be located at the top of the column. In other examples horizontal fluid supplying frame member 804 may be at the bottom or an intermediate layer of the column. In some examples, fluid-supplying frame members may be provided as both horizontal and vertical components of the frame of an automated storage and retrieval system.

As discussed with respect to Figs. 5A, 5B, 5C, 5D, and/or 6, the fluid supplying frame member 804 includes an outlet 806 comprising at least one outlet orifice. Here, the outlet orifice is positioned to deliver fluid to a segment around the transverse perimeter that is facing the column. For instance, the outlet orifice may be directed to face the column such that, when the fluid is introduced from the orifice, gravity draws the fluid down the column.

As shown in Fig. 8, the automated storage and retrieval system may additionally include a fluid source 808 and a distributed network of pipes 810a, 810b, 810c connected thereto. The fluid source 808 and distributed network of pipes 810a, 810b, 810c are as described with respect to corresponding components of Fig. 7, except that the distributor pipes 810b, 810c in Fig. 8 are not located beneath the grid 700, but rather extent vertically to the fluid-supplying pipe 804 at the top of the grid.

### Methods of delivering fluid to an automated storage and retrieval system

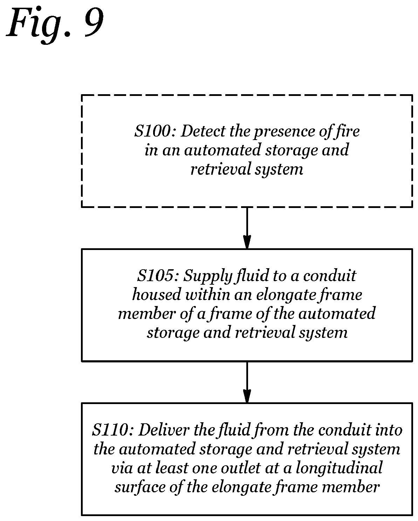

Fig. 9 depicts a flowchart of an example method of delivering fluid to an automated storage and retrieval system, such as the automated storage and retrieval system described with respect to Fig. 1. As described herein, the fluid may be a fire suppressant, such as any agent (liquid, gas, powder, or otherwise) suitable for suppressing fire and for use in fire suppression systems, or an environmental composition, suitable for use in vertical farming.

When the fluid is fire suppressant, the method optionally begins at step S100 in which the presence of fire is detected in an automated storage and retrieval system. Fire may be detected using a fire detection system within the automated storage and retrieval system or at the location thereof. Such a fire detection system may operate to detect a condition indicative of fire in the automated storage and retrieval system. The condition indicative of fire could be the presence of smoke or an elevated temperature. In some examples, the fire detection system may comprise an aspiration system and detecting the presence of fire may comprise detecting the presence of smoke. In some examples, step S100 may comprise detecting the presence of fire in a particular storage column of the automated storage and retrieval system by active fire detection.

Next, the method proceeds to step S105 in which fluid is supplied to a conduit housed within a frame member of a frame of the automated storage and retrieval system, such as the system shown in Fig. 1. Here, the frame member is as described herein with respect to any of Figs. 5A, 5B, 5C, 5D or 6, and the automated storage and retrieval system may include a section of grid 700 as described with respect to Fig. 7, and/or a column 800 as described with respect to Fig. 8. As described herein, the fluid maybe supplied to a conduit from a fluid source and via a distributed network of pipes.

Next, the method proceeds to step S110 in which fluid is delivered from the conduit into the automated storage and retrieval system via at least one outlet at a longitudinal surface of the elongate frame member. When the fluid comprises fire suppressant and the outlet comprises a fire suppression nozzle, the fluid is delivered from the conduit into the automated storage and retrieval system in response to the presence of fire in the automated storage and retrieval system.

In these examples, the presence of fire may actuate a passive actuation valve in the outlet. A passive actuation valve is one which actuates automatically in response to an actuation condition. Accordingly, when the fluid is a fire suppressant, the actuation condition may be a condition indicative of fire such as the presence of smoke, an elevated ambient temperature in the grid, or a flame. As an example, the passive actuation valve may be a fusible element in a sprinkler head. Such a fusible element actuates the sprinkler head at a predetermined temperature. Thus, the fire suppressant is delivered from the conduit into the automated storage and retrieval system by actuating the sprinkler head.

Alternatively, the presence of fire may be detected as in step S100. For instance, fire may be detected in the automated storage and retrieval system, at which stage fluid may be supplied to respective conduits housed within a plurality of elongate frame member(s) of the frame of the automated storage and retrieval system at step S105. Here, fluid maybe delivered to a plurality of storage columns in the automated storage and retrieval system. Alternatively, detecting the presence of fire at step S105 may comprise detecting the presence of fire in particular storage columns of the automated storage and retrieval system. This may be achieved by active, localised fire detection means, such as fire detectors within each column. In these examples, the frame member(s) from which fluid is delivered are disposed adjacent to the particular storage columns.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An elongate frame member for use in a frame of an automated storage and retrieval system, the frame defining a plurality of storage columns for receiving stacks of storage containers, wherein the elongate frame member comprises:
a conduit for carrying fluid; and
at least one outlet at a longitudinal surface of the elongate frame member, each outlet being in communication with the conduit,
wherein the outlet is arranged to deliver the fluid from the conduit into the automated storage and retrieval system, and
wherein the conduit is housed within the elongate frame member.

2. The elongate frame member of claim 1, wherein the outlet comprises a plurality of outlet orifices distributed around a transverse perimeter of the elongate frame member.

3. The elongate frame member of claim 2, wherein each outlet orifice is positioned to deliver the fluid to a respective segment around the transverse perimeter.

4. The elongate frame member of claim 3, wherein, when included in the frame, the frame member is arranged to neighbour a number of storage columns, and the outlet comprises a corresponding number of outlet orifices.

5. The elongate frame member of any previous claim, wherein the fluid comprises fire suppressant and the outlet comprises a fire suppression nozzle.

6. The elongate frame member of claim 5, wherein the fluid comprises at least one of: carbon dioxide, a dry chemical fire suppressant, a foam fire suppressant, a wet chemical fire suppressant, a clean fire suppressant, a dry powder fire suppressant, a condensed aerosol fire suppressant, an inert gas fire suppressant, and/or water.

7. The elongate frame member of claim 5 or claim 6, wherein the fire suppression nozzle comprises a sprinkler head comprising a fusible element configured to actuate the sprinkler head at a predetermined temperature.

8. An automated storage and retrieval system comprising a frame defining a plurality of storage columns for receiving stacks of storage containers, wherein the frame includes at least one elongate frame member according to any previous claim.

9. The automated storage and retrieval system of claim 8, comprising a plurality of elongate frame members, wherein each respective elongate frame member is positioned to deliver the fluid to a different storage column.

10. The automated storage and retrieval system of claim 8 or claim 9, further comprising a fluid source arranged to introduce pressurised fluid into the conduit of each elongate frame member.

11. The automated storage and retrieval system of any of claims 8 to 10, wherein the at least one elongate frame member comprises at least one vertical component of the frame and/or at least one horizontal component of the frame.

12. A method of delivering fluid to an automated storage and retrieval system, the method comprising:
supplying the fluid to a conduit housed within an elongate frame member of a frame of the automated storage and retrieval system, the frame defining a plurality of storage columns for receiving stacks of storage containers; and
delivering the fluid from the conduit into the automated storage and retrieval system via at least one outlet at a longitudinal surface of the elongate frame member.

13. The method of claim 12, wherein the fluid comprises fire suppressant and the outlet comprises a fire suppression nozzle, and the fluid is delivered from the conduit into the automated storage and retrieval system in response to the presence of fire in the automated storage and retrieval system.

14. The method of claim 13, further comprising detecting the presence of fire in a particular storage column of the automated storage and retrieval system, wherein the elongate frame member is disposed adjacent to the particular storage column.

15. The method of claim 13, wherein the at least one fire suppression nozzle comprises a sprinkler head comprising a fusible element configured to actuate the sprinkler head at a predetermined temperature, and delivering the fire suppressant from the conduit into the automated storage and retrieval system comprises actuating the sprinkler head.
